(19) Europäisches Patentamt / European Patent Office / Office européen des brevets

(11) **EP 1 580 887 B1**

(12) **FASCICULE DE BREVET EUROPEEN**

(45) Date de publication et mention
de la délivrance du brevet:
**01.08.2018 Bulletin 2018/31**

(51) Int Cl.:
***H03K 17/16*** *(2006.01)* ***H02P 7/29*** *(2016.01)*

(21) Numéro de dépôt: **05001261.6**

(22) Date de dépôt: **21.01.2005**

(54) **Système de commande de vitesse d'un moteur de groupe moto-ventilateur, notamment pour une installation de chauffage et/ou de climatisation de véhicule automobile**

Geschwindigkeitsregelanlage eines Motors einer Lüftermotoreinheit, insbesondere für eine Heizungs- und Klimaanlage eines Fahrzeuges

Motor speed control system for a fan and motor unit, in particular a heating and/or air-conditioning unit for a motor vehicle

(84) Etats contractants désignés:
**AT BE BG CH CY CZ DE DK EE ES FI FR GB GR HU IE IS IT LI LT LU MC NL PL PT RO SE SI SK TR**

(30) Priorité: **05.03.2004 FR 0402329**

(43) Date de publication de la demande:
**28.09.2005 Bulletin 2005/39**

(73) Titulaire: **Valeo Systèmes Thermiques**
**78321 Le Mesnil St Denis Cedex (FR)**

(72) Inventeurs:
• **Goumain, Xavier**
**78180 Montigny le Bretonneux (FR)**
• **Gatinois, Jean**
**78760 Jouars-Pontchartrain (FR)**

(74) Mandataire: **Metz, Gaëlle**
**Valeo Systèmes Thermiques**
**8, rue Louis Lormand**
**CS 80517 La Verrière**
**78322 Le Mesnil Saint Denis Cedex (FR)**

(56) Documents cités:
EP-A- 0 250 036       EP-A- 0 493 185
EP-A- 0 687 056       EP-A2- 0 823 775
DE-A- 4 429 733       US-A- 4 673 851
US-A- 5 811 948       US-A1- 2004 100 150

• **"PWM Fan Speed Controllers With Minimum Fan Speed, Fan Restart and FanSense Technology for Fault Detection", , 1 January 2003 (2003-01-01), XP055233604, Retrieved from the Internet: URL:http://ww1.microchip.com/downloads/en/ DeviceDoc/21756b.pdf [retrieved on 2015-12-03]**
• **"9ul B UNITRODE APPLICATION NOTE PRACTICAL CONSIDERATIONS IN CURRENT MODE POWER SUPPLIES", , 1 January 1999 (1999-01-01), XP055233759, Retrieved from the Internet: URL:http://www.ti.com/lit/an/slua110/slua1 10.pdf [retrieved on 2015-12-04]**

**Description**

Arrière-plan de l'invention

L'invention concerne un système de commande de vitesse d'un moteur de groupe moto-ventilateur. Le domaine d'application est notamment celui des installations de chauffage et/ou de climatisation, en particulier pour les véhicules automobiles.

Pour de telles applications, il est connu de réaliser un groupe moto-ventilateur du type comportant un boîtier de volute, une turbine logée dans le boîtier de volute pour engendrer un flux d'air dans celle-ci, un moteur d'entraînement de la turbine, et un module de commande du moteur comportant un système de contrôle permettant de faire varier la vitesse du moteur selon les besoins.

Habituellement, le système de contrôle de vitesse du moteur de groupe moto-ventilateur comporte un transistor à effet de champ de type MOS, fonctionnant en modulation de largeur d'impulsion PWM.

Cependant, la modulation de largeur d'impulsion génère des variations rapides de tension et de courant provoquant des perturbations électromagnétiques communément appelées CEM.

Un problème à résoudre est alors la réduction de ces perturbations électromagnétiques.

Il est connu à cet effet que cette réduction dépend entre autre de la pente du courant lors de la commutation du transistor à effet de champ.

Une solution au problème des perturbations électromagnétiques est divulguée par le brevet US 4673851.

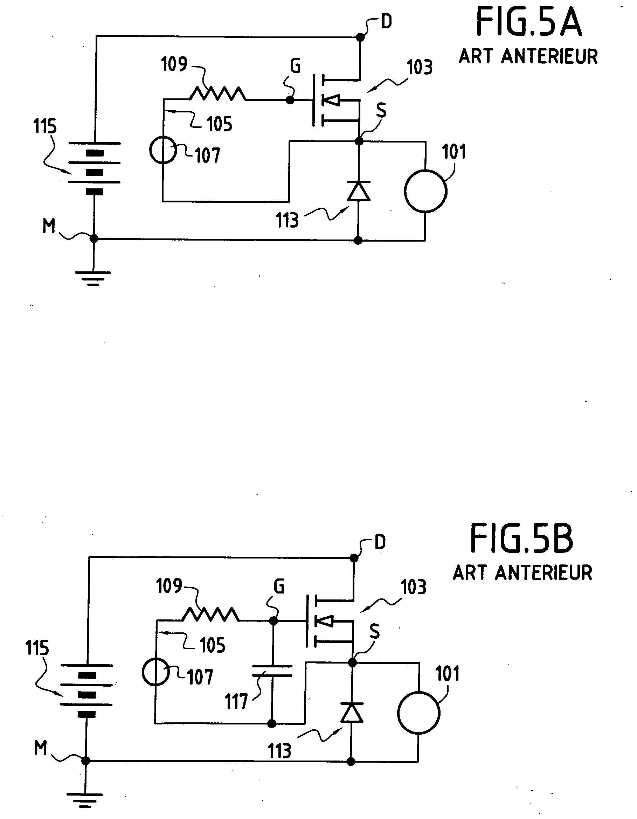

En plus, les figures 5A et 5B montrent deux exemples conventionnels de systèmes de commande de vitesse d'un moteur 101 comportant un transistor à effet de champ 103.

La figure 5A montre qu'un circuit 105, comprenant en série une source de tension 107 de valeur v et un élément résistif 109 de résistance *Rg*, est connecté entre la grille G et la source S du transistor à effet de champ 103.

Une source d'alimentation 115 est reliée au drain D du transistor à effet de champ 103 et à une borne du moteur 101. L'autre borne du moteur 101 est reliée à la source S du transistor à effet de champ 103. En outre, un circuit de roue libre 113 est relié aux bornes du moteur 101.

Dans ce cas, le courant de commutation *I* à travers le transistor à effet de champ 103 dépend de la résistance *Rg* et d'une capacité intrinsèque *Cgs* de ce transistor à effet de champ 103, selon la formule suivante :

$$I = \frac{V}{Rg \times Cgs} \times t \quad,$$

où *t* est le temps.

Ainsi, la pente *P* du courant est donnée par la formule suivante :

$$P(Rg, Cgs) = \frac{V}{Rg \times Cgs}$$

Par conséquent, une augmentation de la valeur de la résistance *Rg* diminue la pente *P* du courant ainsi que celle de la tension lors de la commutation du transistor à effet de champ.

Cependant, la réduction des pentes de tension et de courant génère des pertes thermiques qui risquent de diminuer la fiabilité et les performances du transistor à effet de champ 103.

De plus, la capacité intrinsèque *Cgs* varie d'un composant à l'autre à cause de la tolérance de fabrication de ces composants. Cette variabilité de capacité d'un transistor à un autre provoque des différences dans le niveau de perturbation électromagnétique d'un produit à un autre. Ceci n'est pas acceptable pour un constructeur automobile.

Afin de diminuer l'effet de la capacité intrinsèque, une solution habituelle consiste à ajouter un condensateur.

En effet, la figure 5B montre un système de commande similaire à celui de la figure 5A mais où un condensateur 117 de capacité $C_{gk}$ est ajouté entre la grille G et la source S du transistor à effet de champ 103.

Ainsi, selon le système de commande de la figure 5B, la pente *P* du courant lors de la commutation du transistor à effet de champ 103 est donnée par la formule suivante :

$$P(Rg, Cgs, Cgk) = \frac{k}{Rg(Cgs + Cgk)}$$

Selon cette formule, la diminution de la pente de courant est contrôlée par une augmentation de la capacité $C_{gk}$.

Cependant, une augmentation de la capacité $C_{gk}$ génère une dissipation d'énergie au niveau de la résistance $R_g$. Ainsi, une capacité $C_{gk}$ de grande valeur risque de détériorer ou même de détruire l'élément résistif 109, limitant ainsi la performance de la capacité $C_{gk}$ à contrôler la pente du courant. On est donc limité par le dimensionnement du couple capacité $C_{gk}$ - élément résistif 109.

De plus, la variation de la capacité intrinsèque $C_{gs}$ d'un composant à un autre se traduit toujours par une variabilité importante de la pente de courant, provoquant alors une grande dispersion du niveau de perturbation électromagnétique d'un produit à un autre.

Objet et résumé de l'invention

L'invention a pour but de réaliser un système de commande de vitesse d'un moteur ayant de faibles perturbations électromagnétiques et de rendre négligeable l'impact de la capacité intrinsèque du transistor à effet de champ sur la pente de courant, diminuant ainsi fortement les perturbations électromagnétiques. Ce but est atteint grâce à un système de commande de vitesse d'un moteur de groupe moto-ventilateur selon la revendication indépendante. Selon une première variante, le système comporte un circuit de roue libre relié entre la masse et le noeud relié à la source du transistor à effet de champ par l'intermédiaire de l'inductance, le drain dudit transistor étant relié à une source d'alimentation.

Dans ce qui suit, la source du transistor à effet de champ sera désigné comme la première source et ledit noeud sera désigné comme la deuxième source du transistor à effet de champ. Selon une seconde variante, le système comporte un circuit de roue libre relié entre une source d'alimentation et le drain du transistor à effet de champ, la seconde source dudit transistor étant reliée à la masse.

Avantageusement, le moteur est relié aux bornes du circuit à roue libre.

A titre d'exemple, la valeur de l'inductance est comprise entre 5nH et 30nH.

De préférence, l'inductance est réalisée par un routage de carte à circuit imprimé entre la première source et la seconde source du transistor à effet de champ. La longueur de la piste du routage de carte à circuit imprimé peut être comprise entre 5 mm et 30 mm.

Selon une particularité de l'invention, l'inductance peut être créée par un composant électronique. Le composant électronique peut être un shunt de mesure du courant.

A titre d'exemple, le transistor à effet de champ peut être du type MOS.

L'invention vise aussi un module de commande d'un groupe moto-ventilateur ainsi qu'une installation de chauffage et/ou climatisation pour véhicule automobile comportant un système de commande de vitesse comme ci-dessus.

Brève description des dessins

L'invention sera mieux comprise à la lecture de la description faite ci-après, à titre indicatif mais non limitatif, en référence aux dessins annexés, sur lesquels :

- la figure 1 est une vue très schématique d'un système de commande de vitesse d'un moteur de groupe moto-ventilateur comportant un transistor à effet de champ commandant le moteur par une modulation de largeur d'impulsion, selon un exemple utile pour comprendre l'invention,
- la figure 2 est un mode de réalisation qui se distingue de la figure 1 en ce qu'il comporte un condensateur,
- la figure 3 est une variante de la figure 1,
- la figure 4 est un autre mode de réalisation qui se distingue de la figure 3 en ce qu'il comporte un condensateur, et
- les figures 5A et 5B sont des vues très schématiques de systèmes de commande de vitesse d'un moteur selon l'art antérieur.

Description détaillée de modes de réalisation de l'invention

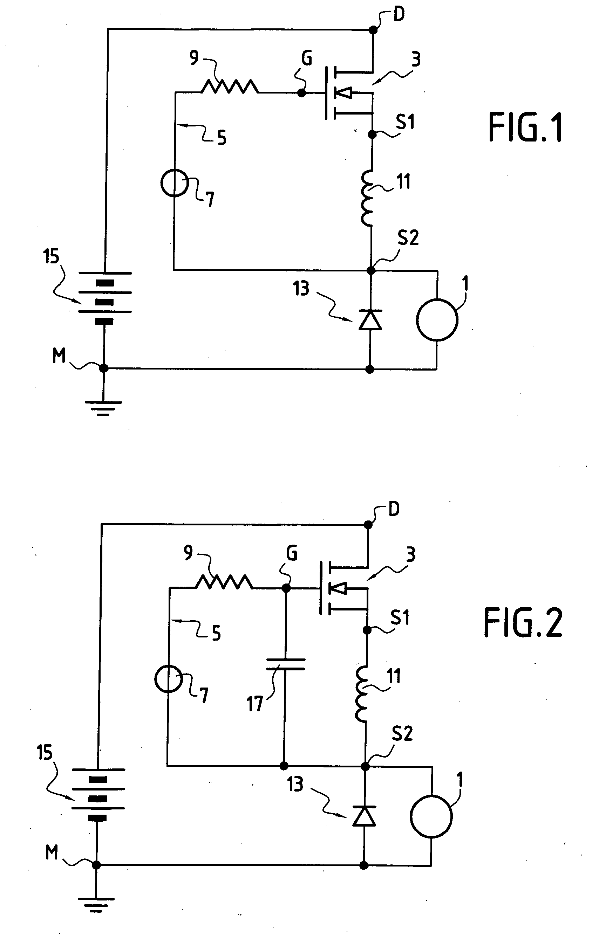

La figure 1 montre très schématiquement un système de commande de vitesse d'un moteur 1 de groupe moto-ventilateur comportant un transistor à effet de champ 3 commandant le moteur 1 par une modulation de largeur d'impulsion. Le transistor à effet de champ 3, par exemple du type MOS, est relié à un circuit 5 comprenant en série une source de tension 7 de valeur *V* et un élément résistif 9 d'une résistance $R_g$. Ce circuit 5 est connecté entre la grille G

du transistor à effet de champ 3 et une seconde source S2 reliée à une première source S1 du transistor à effet de champ 3 par l'intermédiaire d'une inductance 11 de valeur $L$.

Une source d'alimentation 15 est reliée au drain D du transistor à effet de champ 3 et à une borne du moteur 1. L'autre borne du moteur 1 est reliée à la seconde source S2 du transistor à effet de champ 3.

Le système de commande comporte en outre un circuit de roue libre 13 relié entre la masse M et la seconde source S2 du transistor à effet de champ 3, de sorte que le moteur 1 soit relié aux bornes de ce circuit à roue libre 13. Le circuit de roue libre 13 comporte par exemple une diode ou un autre transistor à effet de champ jouant le rôle d'une diode.

Le transistor à effet de champ 3 fonctionne en commutation, saturé/bloqué. Ainsi, lorsque le transistor 3 est saturé, le courant délivré par la source d'alimentation 15 passe à travers le transistor à effet de champ 3 et le moteur 1.

En revanche, lorsque le transistor 3 est bloqué, un courant résiduel dans le moteur 1 passe à travers le circuit de roue libre 13.

Selon cet exemple, la pente $P$ du courant lors de la commutation du transistor à effet de champ 3 dépend de la résistance $R_g$, d'une capacité intrinsèque $C_{gs}$ du transistor à effet de champ 3, de la valeur de l'inductance $L$ affectée par un paramètre $s$ définissant la transconductance du transistor à effet de champ 3 et d'une constante de calcul k. Cette pente $P$ du courant est donnée par la formule suivante :

$$P(Rg, Cgs, L) = \frac{V1}{L \times s + Rg \times Cgs}$$

Comme le montre la formule ci-dessus, on constate que la pente P dépend d'un paramètre supplémentaire qui permet d'une part d'agir sur cette pente et d'autre part de diminuer l'impact de la capacité $C_{gs}$.

Ainsi, l'inductance $L$ permet de diminuer la pente du courant lors de la commutation du transistor à effet de champ 3.

De plus, la valeur de l'inductance $L$ rend négligeable l'impact de la capacité intrinsèque $C_{gs}$ du transistor à effet de champ 3 sur la pente du courant diminuant encore davantage les perturbations électromagnétiques, et donc consécutivement on diminue les dispersions de champ électromagnétique d'un module à un autre.

Un autre avantage est le fait que pour une même pente, il soit possible d'augmenter la valeur de l'inductance $L$ et de diminuer la résistance $R_g$, réduisant ainsi la dissipation d'énergie par ce dernier lors de la commutation du transistor à effet de champ 3.

D'une manière générale, une petite valeur d'inductance est suffisante pour diminuer de façon importante les perturbations électromagnétiques.

Ainsi, l'inductance 11 peut être réalisée par un routage de carte à circuit imprimé, c'est-à-dire une piste conductrice avantageusement en cuivre pratiquée sur la carte à circuit imprimé, entre la première source S1 et la seconde source S2 du transistor à effet de champ 3.

A titre d'exemple, un routage compris entre environ 5mm à 30mm engendre une inductance dont l'ordre est compris entre 5nH et 30nH ce qui est suffisant pour diminuer les perturbations électromagnétiques de façon notable.

On notera que en dessous de 5nH, l'inductance produit un effet trop faible et au dessus de 30nH, l'inductance va créer des pertes par commutation du transistor qui peuvent devenir importantes et conduire à un échauffement anormal du composant et donc le détériorer.

En outre, l'inductance 11 peut être créée par l'inductance parasite d'un composant électronique qui fait déjà partie du système de commande du moteur. Le composant électronique peut être un shunt de faible résistance qui à l'aide d'un comparateur, permet de mesurer le courant dans le moteur.

La figure 2 est un mode de réalisation de l'invention qui se distingue de la figure 1 en ce qu'il comporte un condensateur 17, d'une capacité $C_{gk}$, relié entre la grille G et la seconde source S2 du transistor à effet de champ 3.

Dans ce cas, la pente $P$ au premier ordre, du courant lors de la commutation du transistor à effet de champ 3 dépend de la résistance $R_g$, de la capacité $Cgk$, de la valeur de l'inductance $L$ et d'une constante de calcul $k$.

Cette pente $P$ au premier ordre ne dépend pas de la capacité intrinsèque $C_{gs}$ du transistor à effet de champ 3 et est donnée par la formule suivante :

$$P(Rg, Cgk, L) = \frac{kV1}{L \times Rg \times Cgk}$$

Ainsi, la capacité $C_{gk}$ en plus de la valeur de l'inductance $L$ permet de diminuer de façon appropriée la pente du courant lors de la commutation du transistor à effet de champ 3.

De plus, en première approximation, la pente $P$ ne dépend pas de la capacité intrinsèque $Cgs$ éliminant ainsi tout impact de cette capacité intrinsèque $C_{gs}$ du transistor à effet de champ 3 sur la pente du courant.

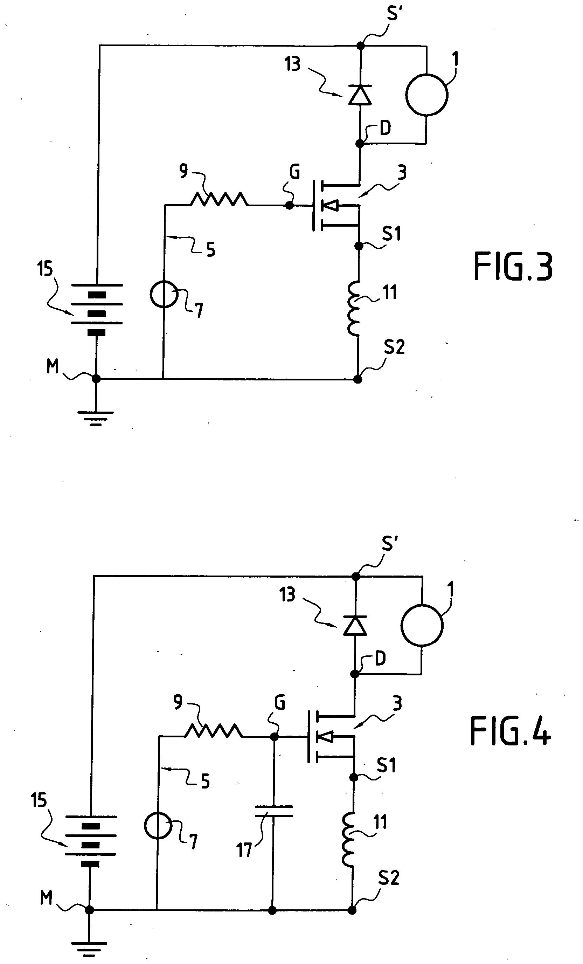

Dans une variante de la figure 1, illustrée en figure 3, le circuit de roue libre 13 est relié entre la source d'alimentation 15 et le drain D du transistor à effet de champ 3. En revanche, la seconde source S2 du transistor à effet de champ 3 est reliée à la masse M.

La figure 4 est un autre mode de réalisation qui se distingue de la figure 3 en ce qu'il comporte un condensateur 17, d'une capacité $C_{gk}$ relié entre la grille G et la seconde source S2 du transistor à effet de champ 3. On comprend ici que l'invention est applicable autant à un circuit dit « high side » qu'à un circuit dit « low side », c'est-à-dire quand le transistor est entre une borne du moteur et la masse. Le système de commande de vitesse ainsi conçu peut dès lors être incorporé facilement dans un module standard de commande d'un groupe moto-ventilateur pour une installation de chauffage et/ou climatisation pour véhicule automobile.

**Revendications**

1.  Système de commande de vitesse d'un moteur (1) de groupe moto-ventilateur comportant un transistor à effet de champ (3) commandant le moteur (1) par une modulation de largeur d'impulsion, le transistor à effet de champ (3) étant relié à un circuit (5) comprenant en série une source de tension (7) et un élément résistif (9), ledit circuit (5) étant connecté entre la grille (G) du transistor à effet de champ (3) et un noeud (S2) relié à la source (S1) du transistor à effet de champ (3) par l'intermédiaire d'une inductance (11) pour permettre une diminution de la pente du courant lors de la commutation du transistor à effet de champ (3), **caractérisé en ce que** ledit système de commande comporte un condensateur (17) relié entre la grille (G) et ledit noeud (S2).

2.  Système selon la revendication 1, **caractérisé en ce qu'**il comporte en outre un circuit de roue libre (13) relié entre la masse (M) et ledit noeud (S2), le drain (D) dudit transistor à effet de champ (3) étant relié à une source d'alimentation (15).

3.  Système selon la revendication 1, **caractérisé en ce qu'**il comporte en outre un circuit de roue libre (13) relié entre une source d'alimentation (15) et le drain (D) du transistor à effet de champ (3), ledit noeud (S2) étant relié à la masse (M).

4.  Système selon l'une quelconque des revendications 2 et 3, **caractérisé en ce que** le moteur (1) est relié aux bornes du circuit à roue libre (13).

5.  Système selon l'une quelconque des revendications 1 à 4, **caractérisé en ce que** la valeur de l'inductance (11) est comprise entre 5nH et 30nH.

6.  Système selon l'une quelconque des revendications 1 à 5, **caractérisé en ce que** l'inductance (11) est réalisée par un routage de carte de circuit imprimé entre la source (S1) du transistor à effet de champ (3) et ledit noeud (S2).

7.  Système selon la revendication 6, **caractérisé en ce que** la longueur de la piste du routage de carte à circuit imprimé est comprise entre 5 mm et 30 mm.

8.  Système selon l'une quelconque des revendications 1 à 5, **caractérisé en ce que** l'inductance (11) est créée par un composant électronique.

9.  Système selon la revendication 8, **caractérisé en ce que** le composant électronique est un shunt de mesure du courant.

10. Système selon l'une quelconque des revendications 1 à 9, **caractérisé en ce que** le transistor à effet de champ (3) est du type MOS.

11. Module de commande d'un groupe moto-ventilateur, muni d'un système de commande de vitesse selon l'une quelconque des revendications 1 à 10.

12. Installation de chauffage et/ou climatisation pour véhicule automobile, comportant un groupe moto-ventilateur muni d'un module de commande selon la revendication 11.

**Patentansprüche**

1. Geschwindigkeitssteuersystem eines Motors (1) einer Gebläseeinheit, das einen Feldeffekttransistor (3) aufweist, der den Motor (1) durch eine Impulsbreitenmodulation steuert, wobei der Feldeffekttransistor (3) mit einer Schaltung (5) verbunden ist, die in Reihe eine Spannungsquelle (7) und ein Widerstandselement (9) enthält, wobei die Schaltung (5) zwischen dem Gate (G) des Feldeffekttransistors (3) und einem Knoten (S2) angeschlossen ist, der mit der Quelle (S1) des Feldeffekttransistors (3) über eine Induktivität (11) verbunden ist, um eine Verringerung des Stromgefälles bei der Umschaltung des Feldeffekttransistors (3) zu erlauben, **dadurch gekennzeichnet, dass** das Steuersystem einen Kondensator (17) aufweist, der zwischen dem Gate (G) und dem Knoten (S2) verbunden ist.

2. System nach Anspruch 1, **dadurch gekennzeichnet, dass** es außerdem eine Freilaufschaltung (13) aufweist, die zwischen der Masse (M) und dem Knoten (S2) verbunden ist, wobei der Drain (D) des Feldeffekttransistors (3) mit einer Versorgungsquelle (15) verbunden ist.

3. System nach Anspruch 1, **dadurch gekennzeichnet, dass** es außerdem eine Freilaufschaltung (13) aufweist, die zwischen einer Spannungsquelle (15) und dem Drain (D) des Feldeffekttransistors (3) verbunden ist, wobei der Knoten (S2) mit der Masse (M) verbunden ist.

4. System nach einem der Ansprüche 2 und 3, **dadurch gekennzeichnet, dass** der Motor (1) mit den Anschlüssen der Freilaufschaltung (13) verbunden ist.

5. System nach einem der Ansprüche 1 bis 4, **dadurch gekennzeichnet, dass** der Wert der Induktivität (11) zwischen 5nH und 30nH liegt.

6. System nach einem der Ansprüche 1 bis 5, **dadurch gekennzeichnet, dass** die Induktivität (11) durch ein Routing einer Leiterplatte zwischen der Quelle (S1) des Feldeffekttransistors (3) und dem Knoten (S2) hergestellt wird.

7. System nach Anspruch 6, **dadurch gekennzeichnet, dass** die Länge der Spur des Routings einer Leiterplatte zwischen 5 mm und 30 mm liegt.

8. System nach einem der Ansprüche 1 bis 5, **dadurch gekennzeichnet, dass** die Induktivität (11) durch ein elektronisches Bauteil erzeugt wird.

9. System nach Anspruch 8, **dadurch gekennzeichnet, dass** das elektronische Bauteil ein Mess-Shunt des Stroms ist.

10. System nach einem der Ansprüche 1 bis 9, **dadurch gekennzeichnet, dass** der Feldeffekttransistor (3) von der Art MOS ist.

11. Steuermodul einer Gebläseeinheit, das mit einem Geschwindigkeitssteuersystem nach einem der Ansprüche 1 bis 10 versehen ist.

12. Heizungs- und/oder Klimaanlage für ein Kraftfahrzeug, die eine mit einem Steuermodul nach Anspruch 11 versehene Gebläseeinheit aufweist.

**Claims**

1. System for controlling the speed of a motor (1) of an electric fan unit comprising a field-effect transistor (3) that controls the motor (1) using pulse-width modulation, the field-effect transistor (3) being connected to a circuit (5) comprising a voltage source (7) and a resistive element (9) in series, said circuit (5) being connected between the gate (G) of the field-effect transistor (3) and a node (S2) that is connected to the source (S1) of the field-effect transistor (3) via an inductor (11) in order to allow a reduction in the slope of the current as the field-effect transistor (3) switches, **characterized in that** said control system comprises a capacitor (17) connected between the gate (G) and said node (S2).

2. System according to Claim 1, **characterized in that** it also comprises a flywheel circuit (13) connected between ground (M) and said node (S2), the drain (D) of said field-effect transistor (3) being connected to a power supply source (15).

3. System according to Claim 1, **characterized in that** it also comprises a flywheel circuit (13) connected between a power supply source (15) and the drain (D) of the field-effect transistor (3), said node (S2) being connected to ground (M).

4. System according to either one of Claims 2 and 3, **characterized in that** the motor (1) is connected across the terminals of the flywheel circuit (13).

5. System according to any one of Claims 1 to 4, **characterized in that** the value of the inductor (11) is in the range 5 nH to 30 nH.

6. System according to any one of Claims 1 to 5, **characterized in that** the inductor (11) is formed by a printed circuit board routing between the source (S1) of the field-effect transistor (3) and said node (S2).

7. System according to Claim 6, **characterized in that** the length of the track of the printed circuit board routing is in the range 5 mm to 30 mm.

8. System according to any one of Claims 1 to 5, **characterized in that** the inductor (11) is created by an electronic component.

9. System according to Claim 8, **characterized in that** the electronic component is a current measurement shunt.

10. System according to any one of Claims 1 to 9, **characterized in that** the field-effect transistor (3) is of the MOS type.

11. Control module for an electric fan unit equipped with a speed control system according to any one of Claims 1 to 10.

12. Heating and/or air conditioning installation for automobile, comprising an electric fan unit equipped with a control module according to Claim 11.

FIG.1

FIG.2

8

FIG.3

FIG.4

FIG.5A
ART ANTERIEUR

FIG.5B
ART ANTERIEUR

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 4673851 A